# EUROPÄISCHE PATENTANMELDUNG

(11) **EP 4 458 545 A1**
(43) Veröffentlichungstag der Anmeldung: **06.11.2024**
(21) Anmeldenummer: 24168195.6
(22) Anmeldetag: 03.04.2024
(51) Int. Cl.: B29C 39/00, B29C 39/02, B29C 70/58, C08J 3/20, C08K 11/00, C08L 97/02, C08L 101/00

(54) **MODIFIZIERTE FÜLLSTOFFPARTIKEL AUF BASIS NACHWACHSENDER ROHSTOFFE, DEREN HERSTELLUNG UND VERWENDUNG**

(30) Priorität: 04.04.2023 DE 102023108599
(71) Anmelder: Gebrüder Dorfner GmbH & Co. Kaolin- und Kristallquarzsand-Werke KG, 92242 Hirschau (DE)
(72) Erfinder: COLELLI, Vanessa, 92224 Amberg (DE); SÜSS, Marco, 92431 Neunburg vorm Wald (DE)
(74) Vertreter: Hannke, Christian

(57) **Zusammenfassung**

Die vorliegende Erfindung betrifft Füllstoffpartikel umfassend ein Trägermaterial aus einem nachwachsenden Rohstoff, deren Oberfläche zumindest abschnittsweise eine Oberflächenbeschichtung aufweist. Außerdem betrifft die Erfindung sowohl eine Gießmasse als auch ein Formteil, welche derartige Füllstoffpartikel umfassen. Weiterhin betrifft die Erfindung ein Verfahren zur Herstellung von Füllstoffpartikeln. Dieses Verfahren schließt die Schritte Bereitstellen mindestens eines Trägermaterials aus einem nachwachsenden Rohstoff, Bereitstellen einer Beschichtungsmasse, und
Aufbringen der Beschichtungsmasse auf zumindest Abschnitte einer Oberfläche des Trägermaterials zur Ausbildung einer zumindest abschnittsweisen Oberflächenbeschichtung ein.

## Beschreibung

Die vorliegende Erfindung betrifft Füllstoffpartikel auf Basis nachwachsender Rohstoffe. Weiterhin betrifft die Erfindung ein Verfahren zu deren Herstellung und eine Verwendung derartiger Füllstoffpartikel.

Aus dem Stand der Technik sind Verbundwerkstoffe bekannt. Diese werden auch als Compositematerialien bezeichnet. Dabei handelt es sich üblicherweise um in eine Matrix aus Polyester- und/oder Acrylharz oder anderer duroplastischen Polymeren eingegossene Füllstoffe, gegebenenfalls gemeinsam mit weiteren Additiven. Derartige Verbundwerkstoffe enthalten in der Regel anorganische Füllstoffe, vorwiegend quarzbasiert. Als Additive sind oft Pigmente beigesetzt. Derartige Verbundwerkstoffe werden beispielsweise verwendet als Küchenspülen, Arbeitsplatten, Waschbecken, Duschtassen, Badewannen, Boden-, Wand- oder Deckenplatten oder Formteile für den Möbelbau.

Als anorganische Füllstoffe finden insbesondere Quarzsand oder Quarzmehl Verwendung. Daneben oder alternativ dazu ist die Verwendung anderer anorganischer Füllstoffe bekannt, insbesondere von Si-, C-, S-, P- und/oder O-anorganischen Materialien. Beispiele derartiger Füllstoffe sind Aluminiumhydroxid, Korund, Calciumcarbonat, Dolomit, Wollastonit, Feldspäte und Baryt.

Außerdem ist aus dem Stand der Technik bekannt, dass auch synthetische und/oder amorphe anorganische Materialien wie Glasfaser oder Glaskugeln als Füllstoff eingesetzt werden können. Ist eine bestimmte Farbe gewünscht, können auch entsprechende Pigmente als Füllstoff dienen. Optional können die Pigmente auch auf der Oberfläche der zuvor genannten Füllstoffe fixiert sein, beispielsweise mittels anorganischen oder organischen Bindemitteln und so dem Verbundwerkstoff-Formteil eine Farbe verleihen, mehrfarbig oder uni, in Kombination mit zusätzlicher Pigmentzugabe im umgebenden Polymer oder auch nicht.

Die Füllstoffe sollen dazu dienen, den Verbundwerkstoffen eine gewünschte Eigenschaftskombination zu geben und gleichzeitig die Herstellkosten gering zu halten. Die Füllstoffe haben gemeinsam, dass sie deutlich preiswerter sind als die Matrix, in die sie eingegossen sind.

Die oben genannten Füllstoffe weisen jedoch einige Nachteile auf. So basieren sie auf endlichen Ressourcen, so dass deren Verfügbarkeit und deren günstiger Einkaufspreis eventuell nicht dauerhaft sichergestellt sein kann. Außerdem weisen die meisten der genannten Füllstoffe eine vergleichsweise hohe Dichte auf, was dazu führt, dass die daraus hergestellten Verbundwerkstoffe schwer sind und damit schwierig zu handhaben sind. Weiterhin verleihen einige dieser Füllstoffpartikel dem Verbundwerkstoff (zumindest lokal) eine so hohe Härte, dass sie mit üblichen aus dem Holzbau bekannten) Werkzeugen nicht zu bearbeiten sind. Einige der aus dem Stand der Technik bekannten Füllstoffe sind nur unter hohem Energieeinsatz gewinn- oder herstellbar. Außerdem sind viele der Füllstoffe beziehungsweise der daraus hergestellten Verbundwerkstoffe aufgrund der inhomogenen Materialzusammensetzung nicht oder nur äußerst schlecht recyclingfähig.

Es besteht daher Bedarf, zumindest teilweise Materialien zu verwenden, welche diese Nachteile nicht haben. Aus dem Stand der Technik sind bereits einige Ansätze bekannt, durch die ebenfalls versucht wird, einige dieser Nachteile zumindest teilweise auszuräumen. So gibt es bereits Ansätze, Füllstoffe auf Basis von nachwachsenden Rohstoffen zu verwenden.

So ist beispielsweise aus EP 4 086 305 A1 eine aushärtbare Gießmasse sowie ein daraus hergestellter Formkörper und ein Verfahren zur Herstellung eines solchen Formkörpers bekannt. Die aushärtbare Gießmasse umfasst in üblicher Weise ein polymeres Bindemittel. Darin werden jedoch abweichend vom oben genannten Stand der Technik als Füllstoff gemahlene Fruchtkerne und/oder Fruchtschalen eingebracht. Dieser Füllstoff aus nachwachsender Quelle kann auch in Kombination mit wenigstens einer weiteren partikulären anorganischer Füllstoffkomponente in der Gießmasse vorhanden sein.

EP 4 134 219 A1 beschreibt eine aushärtbare Gießmasse zur Herstellung von Kunststoffformteilen. Wie auch in der oben genannten Druckschrift ist darin eine Gießmasse mit einer Bindemittelzusammensetzung und einer Füllstoffzusammensetzung beschrieben. Die Füllstoffzusammensetzung umfasst zumindest einen ersten Anteil an anorganischem Füllstoff und einen zweiten Anteil an organischem Füllstoff. Der zweite Anteil an organischem Füllstoff basiert auf zerkleinerten Nussschalen und liegt in einem Gewichtsanteil zwischen 1 Gew.-% und 100 Gew.-% an der Füllstoffzusammensetzung vor.

Aus EP 0 292 628 A2 ist ein Kunstholz, hergestellt aus Kernen oder Schalen von Obst und/oder Splittern von Marmor bekannt. Eine solche synthetische holz- oder marmorähnliche Zusammensetzung, besteht aus Obstkernen oder -schalen oder Marmorsplittern, einem Bindemittel und gegebenenfalls geeigneten Zusatzstoffen, die für verschiedene Zwecke verwendet werden können. Das Verfahren zur Herstellung dieser Zusammensetzungen besteht aus dem Reinigen, Mahlen, Mischen und Formen der reagierenden Materialien.

Die DE 10 2008 026 266 A1 beschreibt Formkörper aus verklebten Granulaten. Bei derartigen Formkörper wird Granulat aus Olivenkernen gewonnen und diese mit Klebstoffen vernetzt. Die Granulate haben eine Korngröße unter 10 mm. Als Klebstoffe werden reaktive Klebstoffe eingesetzt, die ausgewählt sind aus 2K-Epoxidklebstoffen, 2K-PU-Klebstoffen oder 1K-PU-Klebstoffen. Es werden 5 bis 100% Klebstoff bezogen auf 100% Granulat eingesetzt.

Ein Ansatz zur Nutzung biogener Quellen zur Herstellung der Bindemittelkomponente ist in EP 2 981 584 A1 beschrieben. Aus dieser Druckschrift geht ein mehrkomponentiges Kunstharz-Verklebungsmittel für den Befestigungsbereich hervor, das insbesondere zum Verkleben von einem Verankerungselement in einem Loch oder Spalt geeignet ist. Es umfasst reaktiven Verdünner und/oder Harz und gegebenenfalls weitere Zusätze und zeichnet sich dadurch aus, dass der reaktive Verdünner und/oder das Harz mindestens einen reaktiven Verdünner und/oder ein Harz mit biogenem Anteil beinhaltet.

Aus WO 2013/049499 A1 sind Bindemittelzusammensetzungen und Verfahren zur Herstellung und Verwendung derselben bereitgestellt. Die Bindemittelzusammensetzung zur Herstellung von Verbundprodukten auf Basis von Lignocellulose umfasst eine Mischung aus einer ersten Vielzahl von Teilchen, die ein oder mehrere Harze auf Aldehydbasis umfassen, und einer zweiten Vielzahl von Teilchen, die einen oder mehrere Füllstoffe, ein oder mehrere Streckmittel oder eine Kombination davon umfasst.

WO 2021/145 472 A1 offenbart künstlichen Marmor und ein Verfahren zu seiner Herstellung. Der künstliche Marmor soll umweltfreundlich sein, da er durch die Pulverisierung von Getreidespelzen oder Fruchtschalen und deren Zugabe bei der Herstellung von künstlichem Marmor einen Rohstoff aus einer nachwachsenden Quelle verwendet wird. Die Autoren beschreiben das erhaltene Produkt als eine natürliche Schönheit aufweisend. Der künstliche Marmor wird unter Verwendung eines ungesättigten Polyesterharzes oder eines Acrylharzes hergestellt und umfasst 5 - 80 Gewichtsteile Getreidespelzenpulver in Bezug auf 100 Gewichtsteile des ungesättigten Polyesterharzes oder des Acrylharzes. Als Zusatzstoffe, bezogen auf 100 Gew.-Teile des ungesättigten Polyesterharzes oder des Acrylharzes sind 10-100 Gew.-Teile eines oder mehrerer thermoplastischer Additive vorgesehen, die ausgewählt sind aus PS, PE und PVAc. Außerdem sind 200 - 300 Gew.-Teile Aluminiumhydroxid als anorganischer Füllstoff, 10 - 100 Gew.-Teile Farbchips, 5 - 100 Gew.-Teile Polyvinylalkoholfaser als Verstärkungsmaterial, 0,1 - 5 Gewichtsteile eines organischen Peroxids als Härtungskatalysator und 5 - 30 Gewichtsteile eines Trennmittels vorgesehen.

Auch wenn die in diesen Druckschriften beschriebenen Materialien mindestens eine Komponente aus einem nachwachsenden Rohstoff umfassen, weisen sie dennoch erhebliche Nachteile auf. Diese liegen insbesondere darin, dass diese beschriebenen nachwachsenden Materialien nur lokal begrenzt vorkommen. Viele der beschriebenen Rohstoffe sind im Mittelmehrraum verfügbar, müssten aber für deren Verwendung in nördlicheren Regionen Europas über längere Strecken transportiert werden. Dies ist bei geringer Schüttdichte und dem hohen Volumen der beschriebenen Rohstoffe nachteilig, da dies einen sehr hohen Frachtkostenanteil hervorruft und die angestrebte verbesserte CO₂-Bilanz deutlich verschlechtert.

Ein weiterer Nachteil vieler nachwachsender Rohstoffe besteht darin, dass bei deren Aufbereitung und Einstellung eines definierten Korngrößenbereichs (beispielsweise etwa 0,1 - 0,5 mm) auch immer ein beträchtlicher Feinanteil <0,1 mm anfällt. Dieser kann bei den oben beschriebenen Verfahren nicht genutzt werden, was diesen Rohstoff verteuert und zu Lasten des ganzheitlichen Lösungsansatzes geht.

Ein wesentlicher Nachteil beim Einsatz von Rohstoffen aus nachwachsenden Quellen besteht darin, dass sie eine hohe spezifische Oberfläche aufweisen und/oder sehr saugfähig sind. Dies resultiert in einem erhöhten Bindemittel- bzw. Harzbedarf bei der Formteilherstellung. Dies hat aufgrund der hohen Kosten für das Bindemittel / Harz wiederum Kostennachteile. Zudem ist die Verarbeitungsfähigkeit dadurch sehr stark eingeschränkt, da die Viskosität der Gießmasse stark ansteigt und der Formausbildungsprozess sehr stark eingeschränkt wird.

Außerdem weisen viele der oben genannten Rohstoffe Oberflächen auf, die aufgrund ihrer Beschaffenheit schwer zu benetzen sind. Um diese Partikel dennoch in einen Verbundwerkstoff einbinden zu können, ist der Zusatz kostenintensiver Additive notwendig. Zudem führt die reduzierte Benetzung dazu, dass diese Grenzflächen wie Sollbruchstellen wirken, die ein nachteiliges Grenzflächenverhalten zur Folge haben. Dies kann zu einer Reduzierung in der Festigkeit oder einem unerwünschten Saugverhalten der Formteile bei Wasserkontakt resultieren, was wiederum zu unerwünschten Aufhellungen der Verbundwerkstoffe führen kann.

Ein weiterer Nachteil ergibt sich aus der oben bereits diskutierten geringen Dichte der beschriebenen Materialien. Dies kann bei deren Verarbeitung zu einem Verbundwerkstoff dazu führen, dass diese Materialien in der noch viskosen Gießmasse aufschwimmen und so eine Anreicherung an der Oberfläche stattfindet. Dies kann oft nur mit erhöhtem maschinellem verhindert werden. Auch der Mischaufwand zur Herstellung der Gießmasse kann durch diesen Effekt erhöht sein, was den Maschinen- und Energieaufwand erhöht.

Es besteht daher der Bedarf, Füllstoffpartikel auf Basis nachwachsender Rohstoffe bereitzustellen, die die oben genannten Nachteile nicht aufweisen. Weiterhin besteht Bedarf an einem Verfahren zur Herstellung derartiger Füllstoffpartikel, sowie daran, Möglichkeiten zur Verwendung derartiger Füllstoffpartikel aufzuzeigen.

Gelöst wird diese Aufgabe durch Füllstoffpartikel umfassend ein Trägermaterial aus einem nachwachsenden Rohstoff wobei eine Oberfläche des Trägermaterials zumindest abschnittsweise eine Oberflächenbeschichtung, insbesondere eine das Trägermaterial nicht vollständig umgebende Oberflächenbeschichtung, aufweist. Vorzugsweise ist somit die Oberfläche des Trägermaterials nicht vollständig von der Oberflächenbeschichtung bedeckt.

Durch die das Trägermaterial mindestens teilweise umgebende Oberflächenbeschichtung können die Eigenschaften der Füllstoffpartikel gezielt eingestellt werden. Insbesondere kann vermieden werden, dass bei der Herstellung einer Gießmasse die Oberfläche nicht vollständig benetzt wird oder die Oberfläche des nachwachsenden Rohstoffs sehr viel Bindemittel oder Lösungsmittel aufnimmt und damit die Zusammensetzung der Bindemittelzusammensetzung negativ verändert. Insbesondere durch die Auswahl der Oberflächenbeschichtung und/oder den Anteil der von der Oberflächenbeschichtung überdeckten Teil der Oberfläche des Trägermaterials kann eingestellt werden, wie gut die Benetzung und/oder Bindung der Füllstoffpartikel in einer Gießmasse und/oder einem Formteil ist. Alternativ oder ergänzend dazu kann die Bindemittelmenge eingestellt werden, welche notwendig ist, um eine ausreichend feste Bindung der Füllstoffpartikel in einem Formteil zu erreichen.

Als Trägermaterial haben sich insbesondere nachwachsende Rohstoffe als geeignet erwiesen, die ausgewählt sind aus einer Gruppe, die Kerne, Schalen, Kernfolgeprodukte, Schalenfolgeprodukte, biobasierte Kunststoffe, biobasierte Monomere, biobasierte Polymere, Ligninfolgeprodukte, Holz, Holzfolgeprodukte (beispielsweise Späne, Fasern, Zellstoff, Lignin, Kork, Laub, Nadeln), Papier, Karton, Presspahnmaterialien, MDF (Mitteldichte Holzfaserplatte), HDF (Hochdichte Faserplatte), OSB (englisch für oriented strand board, Grobspanplatten), Faserverbunde, imprägnierte Faserverbunde, Dämmmaterialien, Kurzumtriebspflanzen und deren Folgeprodukte (beispielsweise Baumwolle, Gras, Stroh, Spelzen, Kleie, Hanffasern, Sisal, Jute), Obst- und Ackerfrüchte und deren Folgeprodukte (beispielsweise Zuckerrübenfasern, Melasse, Trester), Fermentationsmaterialien, Fermentationsrückstände und vergleichbares (beispielsweise Hefezellen, Filtrationsrückstände der Wein, Saft und Bierherstellung), Ölfrüchte, deren Kerne und bei der Ölgewinnung verbleibende Presskuchen, Materialien tierischen Ursprungs (beispielsweise Wolle, Haare, Knochen) und Polymere (Thermoplaste, Duroplaste und/oder Elastomere) umfasst. Wie dieser Liste entnommen werden kann, ermöglicht die zumindest teilweise Oberflächenbeschichtung die Nutzung einer gegenüber dem Stand der Technik viel breitere Materialauswahl. Dadurch können nicht nur äußerst günstige Reststoffe zur Herstellung der Füllstoffpartikel genutzt werden, sondern auch deren Eigenschaften können über ein besonders breites Spektrum nach den jeweiligen Anforderungen eingestellt werden.

Die oben genannten Materialien können mit sich und/oder anderen in jedem Verhältnis gemischt sein sowie optional zusätzlich weitere anorganische und/oder organische Materialien enthalten.

In einer bevorzugten Ausgestaltung umfasst der Füllstoffpartikel mindestens ein weiteres anorganisches und/oder organische Material. Vorzugsweise ist mindestens ein weiteres Material ausgewählt aus einer Gruppe, die einen Füllstoff, ein Pigment, ein Additiv, ein Bindemittel, ein Trennmittel, einen organischen und/oder anorganischen Funktionsstoff, Glitter, Glimmer, ein Effektpigment, ein anorganisches und/oder ein organisches Rheologieadditiv und ein Biozid umfasst. Diese weiteren Materialien können die Füllstoffpartikel weiter für eine vorgesehene Verwendung geeignet machen. So ist beispielsweise denkbar, dass durch Pigmente, Glitter, Glimmer oder ein Effektpigment die Füllstoffpartikel im Hinblick auf eine gewünschte optische Eigenschaft eines diese Füllstoffpartikel enthaltendes Formteil eingestellt, beispielsweise eingefärbt werden. Alternativ oder ergänzend dazu kann ein weiteres Material die Handhabung verbessern, beispielsweise die rheologischen Eigenschaften verbessern und/oder die Staubbildung verringern. Ebenso ist alternativ oder ergänzend dazu denkbar, dass ein weiteres Material innere Oberflächen der Trägerpartikel für Bindemittel unzugänglich macht, wobei diese inneren Oberflächen für ein Bindemittel unzugänglich werden und dadurch die benötigte Menge des meist deutlich teureren Bindemittels bei der Herstellung von Formteilen verringert werden kann.

Es kann optional vorteilhaft sein, dass die zur Herstellung der Füllstoffpartikel verwendeten Rohstoffe und/oder Materialien getrennt, sortiert, behandelt, imprägniert, klassiert, thermisch behandelt, mit UV-, IR- und/oder Röntgenstrahlen behandelt sind und/oder werden. Denkbar ist ein solcher Schritt jedoch auch zur Nachbehandlung der oberflächenbeschichteten Trägerpartikel, beispielsweise zur Fixierung der Oberflächenbeschichtung auf dem Trägerpartikel zur Ausbildung der Füllstoffpartikel.

Die zur Herstellung der Füllstoffpartikel verwendeten Rohstoffe und/oder Materialien können optional auf eine bestimmte Korngröße gebracht sein und/oder werden. Dies erfolgt bevorzugt durch ein mechanisch-physikalisches Verfahren. Dies kann beispielsweise mittels eines Verfahrens erfolgen, das ausgewählt ist aus einer Gruppe, die brechen, mahlen, schneiden, kompaktieren, granulieren, sprühgranulieren, aufbaugranulieren, Wirbelschichtverfahren, extrudieren oder ähnliches umfasst.

Alle oben genannten Verfahrensschritte können nacheinander, miteinander, zeitlich und räumlich getrennt voneinander durchgeführt werden.

Vorzugsweise wird oder werden die ausgewählten Materialien (gegebenenfalls unabhängig voneinander) auf eine mittlere Korngröße von 0 - 10 mm, bevorzugt 0 - 5 mm, mehr bevorzugt 0 - 3 mm, weiter bevorzugt 0 - 2 mm, insbesondere bevorzugt 0 - 1000 µm, gegebenenfalls auch 0 - 500 µm, mehr bevorzugt 0 - 100 µm, weiter bevorzugt 0,1 - 5 mm, insbesondere bevorzugt 0,1 - 3 mm oder 0,1 - 2 mm eingestellt.

Sofern im Rahmen dieser Erfindung nichts anderes angegeben ist, sollen alle Angaben zur Partikelgröße als mittlere Partikelgröße (d50) verstanden werden. Diese (und jede andere Partikelgröße) soll jeweils, sofern nicht etwas anderes definiert ist, als mittels Laserbeugung und/oder Siebanalyse bestimmt offenbart gelten. Ob die Bestimmung mittels Laserbeugung oder Siebanalyse für eine bestimmte Partikelgröße geeigneter ist, ist einem Fachmann bekannt: während für gröbere Partikel (etwa 0,5 mm oder größer) eine Siebanalyse einfacher, schneller und ausreichend genau ist, hat sich für kleinere Partikelgrößen die Laserbeugung als besonders geeignet erwiesen.

In einer bevorzugten Ausführungsform weist das Trägermaterial eine mittlere Korngröße (d50, Laserbeugung und/oder Siebanalyse) von ≤ 10 mm, bevorzugt ≤ 5 mm, mehr bevorzugt ≤ 3 mm, weiter bevorzugt ≤ 2 mm, insbesondere bevorzugt ≤ 1000 µm, gegebenenfalls auch ≤ 500 µm, mehr bevorzugt ≤ 100 µm, und/oder 0,1 - 5 mm, bevorzugt 0,1 - 3 mm, weiter bevorzugt 0,1 - 2 mm auf.

Vorzugsweise umfasst das Trägermaterial eine Mischung von Fraktionen verschiedener Materialien und/oder Korngrößen. Dabei müssen nicht alle eingesetzten Rohstoffe nachwachsende Rohstoffe sein. In einer bevorzugten Ausgestaltung umfasst eine (Rohstoff-) Fraktion vorzugsweise Quarzsand und/oder Quarzmehl. In einer dazu alternativen Variante ist das Trägermaterial eine Mischung von Fraktionen verschiedener Materialien und/oder Korngrö-ßen, wobei die Mischung in der Summe einen Quarzanteil oder - in verallgemeinerter Form - einen Anteil kristalliner Kieselsäure < 0,1 Ma-% enthält. In dieser Variante umfasst vorzugsweise mindestens eine Fraktion einen Partikulären Rohstoff, der ausgewählt ist aus einem Rohstoff auf Basis eines Carbonats, Hydroxids, Oxids, Silikats, Sulfats, Phosphats oder Mischungen dieser. Dieser Rohstoff kann als partikuläres Material einer spezifischen Körnung eingesetzt werden und/oder als Mehl.

In einer bevorzugten Ausführungsform werden Mischungen von Fraktionen verschiedener Materialien und/oder Korngrößen verwendet. Es können in einer bevorzugten Ausführungsform auch gleiche oder verschiedene Fraktionen gleicher oder verschiedener Materialien gemischt sein.

Ein weiterer wesentlicher Aspekt der Erfindung ist eine Gießmasse, umfassend ein oder mehrere Bindemittel, ausgewählt aus einer Gruppe, die ein ungesättigtes flüssiges aushärtbares Polyesterharz; ein flüssiges aushärtbares Monomer, Oligomer oder Polymer, insbesondere MMA und/oder PMMA; ein aushärt-bares Melaminharz; ein aushärtbares Formaldehydharz; ein aushärtbares Epoxidharz; und ein Polyurethanharz umfasst. Diese Gießmasse zeichnet sich dadurch aus, dass sie ≥ 20 Massenprozent, bevorzugt ≥ 40 Massenprozent, weiter bevorzugt ≥ 60 Massenprozent, meist bevorzugt ≥ 80 Massenprozent der wie oben beschriebenen Füllstoffpartikel umfasst.

Eine solche Gießmasse kann beispielsweise zur Herstellung von Formteilen genutzt werden.

Ein weiterer wesentlicher Aspekt der Erfindung ist daher ein Formteil, umfassend ein oder mehrere zumindest teilweise ausgehärtetes Bindemittel, ausgewählt aus einer Gruppe, die ein ausgehärtetes Polyesterharz; ein Polymer, ins-besondere MMA und/oder PMMA; ein ausgehärtetes Melaminharz; ein ausgehärtetes Formaldehydharz; ein ausgehärtetes Epoxidharz; und ein Polyurethan umfasst. Ein solches Formteil weist ≥ 20 Massenprozent, bevorzugt ≥ 40 Massenprozent, weiter bevorzugt ≥ 60 Massenprozent, meist bevorzugt ≥ 80 Massenprozent der wie oben beschriebenen Füllstoffpartikel auf.

Ein weiterer wesentlicher Aspekt der Erfindung ist ein Verfahren zur Herstellung von Füllstoffpartikeln. Dieses Verfahren zeichnet sich durch die Schritte
- Bereitstellen mindestens eines Trägermaterials aus einem nachwachsenden Rohstoff,
- Bereitstellen einer Beschichtungsmasse, und
- Aufbringen der Beschichtungsmasse auf zumindest Abschnitte einer Oberfläche des Trägermaterials zur Ausbildung einer zumindest abschnittsweisen Oberflächenbeschichtung aus.

Mit einem solchen Verfahren ist es besonders einfach möglich, wie oben beschriebene Füllstoffpartikel herzustellen. Das Verfahren wird daher insbesondere zur Herstellung der wie oben beschriebenen Füllstoffpartikel herangezogen. Dementsprechend sollen alle für die im Rahmen dieser Beschreibung für die Füllstoffpartikel gemachten Offenbarungen auch analog für das hierin beschriebene Verfahren gelten. Andererseits sollen auch alle verfahrensseitigen Offenbarungen als Offenbarungen zur Definition der Füllstoffpartikel gelten.

In einer bevorzugten Verfahrensvariante wird das oder die ausgewählten Materialien einem sogenannten Veredelungsverfahren unterzogen. Dabei kann eine Materialart veredelt werden oder mehrere der oben beschriebenen Materialarten gemeinsam veredelt werden. Optional können zusätzlich auch zusätzliche Materialien ebenfalls diesem Schritt unterzogen werden.

Bevorzugt schließt das Veredelungsverfahren einen Prozess ein, mittels welchem die oben beschriebenen, im Stand der Technik auftretenden oberflächen-, dichte- und/oder schüttdichtebasierten Nachteile zu kompensieren und/oder ausgeräumt werden können.

In einer bevorzugten Ausführungsform wird dazu ein Verfahrensschritt oder mehrere Verfahrensschritte genutzt, welcher/welche ausgewählt ist/sind aus einer Gruppe, die kompaktierende Verfahren, Entlüftung, Vakuumbehandlung, Druckbeanspruchung, Extrusion, Spritzguss und Füssiggussverfahren umfasst. Bevorzugt umfasst das Veredelungsverfahren einen Pressschritt und/oder Extrusionsschritt.

In einer bevorzugten Variante des Verfahrens wird dem oder den Materialien vor und/oder während des Veredelungsschritts ein Bindemittel zugegeben. Bevorzugt ist das Bindemittel ausgewählt aus einer Gruppe, die Alkohole, Alkane, Wachse, Polymere, Oligomere, PU (Polyurethan), Epoxi, PVA (Polyvinylacetat), Polyester, Acrylat, PVC, PP, PE, PA und andere umfasst. Der oder die Bindemittelanteil / Bindemittelanteile kann/können mineralölbasiert sein, stammt/stammen aber bevorzugt aus einer nachwachsenden Quelle. Auch Mischungen von einem oder mehreren mineralölbasierten Bindemittel/n mit einem oder mehreren biobasierten Bindemittel/Bindemitteln sind denkbar. Alternativ oder ergänzend dazu können auch anorganische Bindemittel zugesetzt werden. Vorzugsweise ist ein anorganisches Bindemittel ausgewählt aus einer Gruppe, die Wasserglas, Phosphat-Bindemittel, Gips, Zement und andere hydraulische Bindemittel umfasst.

Das oder die Bindemittel können in einem großen Verhältnisbereich eingesetzt werden. Der Bindemittelanteil kann zwischen 0,01-99,99 Massenprozent bezogen auf die Masse Endprodukts liegen. Bevorzugt ist der Massenanteil des Bindemittels jedoch deutlich geringer, nämlich < 50, bevorzugt < 20, weiter bevorzugt < 10 und insbesondere bevorzugt < 5 Ma-%.

Optional können grenzflächenaktive Substanzen zugegeben werden. Dabei handelt es sich vorzugsweise um eine oder mehrere Substanzen aus einer Gruppe die Silane und Silicone umfasst. Grenzflächenaktive Bestandteile können mineralölbasiert oder, sofern möglich, bevorzugt auch auf nachwachsender Rohstoff Basis sein. Es können alternativ oder ergänzend dazu auch anorganische Füllstoffe, Additive, Flammschutzmaterialien, Pigmente zugegeben werden. Bevorzugt werden Pigmente zugegeben.

Bevorzugt ist für die vorliegende Erfindung, dass die durch die (Auswahl der) oben beschriebenen Prozesse erhaltenen Materialien einem mechanisch-physikalisches Verfahren zur Einstellung einer Zielpartikelgröße unterzogen werden.

Es sind auch Mischungen von Fraktionen verschiedener Zielpartikelgrößen möglich.

Vorzugsweise liegt die Zielpartikelgröße im Bereich einer mittleren Korngröße von 0 - 10 mm, bevorzugt 0 - 5 mm, mehr bevorzugt 0 - 3 mm, weiter bevorzugt 0 - 2 mm, insbesondere bevorzugt 0 - 1000 µm, gegebenenfalls auch 0 - 500 µm, mehr bevorzugt 0 - 100 µm, weiter bevorzugt 0,1 - 5 mm, insbesondere bevorzugt 0,1 - 3 mm oder 0,1 - 2 mm eingestellt.

Ergänzend oder alternativ zu der oben beschriebenen Zielpartikelgröße ist das Verfahren zur Einstellung einer Zielpartikelgröße vorzugsweise ausgewählt aus einer Gruppe, die brechen, mahlen, schneiden, kompaktieren, granulieren, sprühgranulieren, aufbaugranulieren, Wirbelschichtverfahren, extrudieren, oder ähnliches umfasst. Die Einstellung der Zielpartikelgröße kann bei Raumtemperatur oder gekühlt (Kryobruch) in Schutzgas oder atmosphärisch erfolgen. Dieses Verfahren zur Einstellung der Zielpartikelgröße hat zur Folge, dass die zuvor erhaltenen Partikel oder Agglomerate aufgebrochen werden. Dadurch werden Oberflächenbereiche des Trägermaterials freigelegt, die zuvor von einer wie oben beschriebenen Oberflächenbeschichtung bedeckt waren. Dadurch kann erreicht werden, dass der natürliche Charakter des Trägermaterials wieder zur Wirkung gelangt. Gleichzeitig kann jedoch die durch die Oberflächenbeschichtung eingestellte positive Eigenschaft zumindest abschnittsweise beibehalten werden. Dadurch wird ermöglicht, dass beispielsweise die feste Bindung der (teilweise oberflächenbeschichteten) Partikel in der Bindemittelmatrix des Verbundwerkstoffs sichergestellt werden kann.

Insbesondere ist bevorzugt, dass die Füllstoffpartikel auf eine Zielpartikelgröße eingestellt werden, wobei die Einstellung der Zielpartikelgröße vorzugsweise einen Verfahrensschritt umfasst, welcher ausgewählt ist aus einer Gruppe, die brechen, mahlen, schneiden, kompaktieren, granulieren, sprühgranulieren, aufbaugranulieren, Wirbelschichtverfahren und extrudieren umfasst

Nach und/oder während des Schrittes der Einstellung einer Zielpartikelgröße kann das Material optional klassiert werden. Vorzugsweise erfolgt dies durch ein Verfahren, das ausgewählt ist aus einer Gruppe, die sieben und sichten umfasst. Der dabei erhaltene Grobanteil kann optional einer Zerkleinerung zugeführt werden. Der Feinstanteil, der sich vorzugsweise durch eine mittlere Partikelgröße (d50) ≤ 100 µm, weiter bevorzugt ≤ 50 µm auszeichnet, kann abgetrennt werden und beispielsweise dem oben beschriebenen Verfahren erneut zugeführt werden, wobei bevorzugt die Partikel des Feinstanteils als Trägermaterial fungieren.

Die auf die Zielpartikelgröße eingestellten Füllstoffpartikel können weiterbehandelt werden. Diese Weiterbehandlung dient insbesondere dazu, den Partikeln eine weitere Eigenschaft zu verleihen. Diese kann die durch die oben beschriebene erste Oberflächenbeschichtung verliehene Eigenschaften verstärken und/oder ergänzen. Vorzugsweise ist ein Schritt der Weiterbehandlung ausgewählt aus einer Gruppe, die aufbringen einer Oberflächenbeschichtung, hydrophobieren, hydrophilieren, pigmentieren, einfärben, mit Bindemittel versehen, mischen mit anderen organischen und/oder anorganischen Materialien (beispielsweise mit Effektpigmenten, Glimmern), sowie ausrüsten mit elektrisch leitfähigen oder anderen funktionellen Materialen umfasst.

Vorzugsweise werden Mischungen mit Quarzsand und/oder Quarzmehl hergestellt und verwendet, entweder naturfarben oder auch mit gefärbten Sanden. In einer Variante alternativ dazu auch Füllstoffe, die in der Summe einen Quarzanteil - oder in verallgemeinerter Form - einen Anteil kristalliner Kieselsäure < 0,1 Ma-% enthalten, beispielsweise auf Carbonat-, Hydroxid-, Oxid-, Silikat-, Sulfat-, Phosphat-Basis oder Mischungen dieser, sowohl als Körnung und/oder als Mehl,

Optional kann der als Weiterbehandlung beschriebene Schritt auch für die weiter oben beschriebenen Partikel und/oder Rohstoffe durchgeführt werden und die dabei erhaltenen Partikel den auf die Zielpartikelgröße eingestellten Füllstoffpartikeln zugemischt werden.

Die auf die Zielpartikelgröße eingestellten Füllstoffpartikel werden (gegebenenfalls nach der Weiterbehandlung) alleine oder in Mischung mit sich selbst oder auch in Mischung mit anderen der oben beschriebenen Partikel und/oder anorganischen Bestandteilen, bevorzugt Quarzsand und/oder Quarzmehl oder alternativ dazu den oben beschriebenen quarzanteilreduzierten Füllstoffen zur Herstellung einer aushärtbaren Gießmasse eingesetzt. Eine oder mehrere der eingesetzten Komponenten kann oberflächenpigmentiert sein oder nicht. Eine oder mehrere der eingesetzten Komponenten kann oberflächenmodifiziert, z.B. silanisiert sein oder nicht.

Vorzugsweise werden der Gießmasse zusätzlich Pigmente und/oder weitere Additive zugesetzt. Dadurch ist es möglich, einem aus einer solchen Gießmasse gebildeten Formteil eine gewünschte optisch wahrnehmbare Eigenschaft, beispielsweise eine Farbe zu verleihen.

Insbesondere ist bevorzugt, dass ein Bindemittel ausgewählt ist aus einer Gruppe, die ein ungesättigtes flüssiges aushärtbares Polyesterharz, eine flüssige aushärtbare Gießharzmasse enthaltend MMA und/oder PMMA, ein aushärtbares Melaminharz, ein aushärtbares Formaldehydharz, ein aushärtbares Epoxidharz und ein Polyurethanharz umfasst. Auch Mischungen mehrerer Polymere und/oder Harze ist denkbar. Diesem Polymer beziehungsweise Harz können Additive wie Pigmente und/oder Rheologieadditive zugesetzt sein.

Die Gießmasse wird vorzugsweise in eine Form gebracht, in der sie zur Aushärtung gebracht wird. Diese Form kann die Form eines gewünschten Formteils sein oder eine Vorform, die (gegebenenfalls in Kombination mit weiteren Elementen) zu dem gewünschten Formteil umgesetzt werden kann.

Der Massenanteil der auf dem oben beschriebenen nachwachsenden Rohstoff basierenden (Füllstoff-) Komponenten in der Gießmasse ist vorzugsweise ≥ 20, bevorzugt ≥ 40, weiter bevorzugt ≥ 60, meist bevorzugt ≥ 80 Ma%. Alternativ oder ergänzend dazu ist ein Massenanteil einer anorganische (Füllstoff-) Komponente ≥ 10, bevorzugt ≥ 20 enthalten. Unabhängig davon ist ein Massenanteil einer anorganischen (Füllstoff-) Komponente vorzugsweise ≤ 70 %, bevorzugt ≤ 60 %, weiter bevorzugt ≤ 50 %.

Vorzugsweise werden die Formteile hergestellt, indem die gefüllten und aushärtbaren Gießmassen händisch, maschinell, z. B. mittels Gießmaschinen einer Form zugeführt werden und darin optional unter Druck und/oder optional bei erhöhter Temperatur und/oder einer weiteren reaktionsfördernden Maßnahme wie beispielsweise Katalyse und/oder Begasung zur Aushärtung gebracht werden. Optional kann der thermischen Härtung auch eine Kühlung folgen. Dies kann z.B. mittels wassergekühlter Formbestandteile erfolgen.

Nach einer gewissen Reaktionszeit wird das Bauteil entformt und optional weiter gehärtet, entweder thermisch und/oder unter Druck und/oder UV-Bestrahlung. Optional können auch mehrere dieser weiteren Härtungen gleichzeitig oder nacheinander, optional auch zeitlich und räumlich voneinander getrennt, erfolgen.

Das auf diese Weise erhaltene Bauteil wird optional nachbehandelt. Bei diesem Nachbehandlungsschritt handelt es sich vorzugsweise um einen Schritt, der ausgewählt ist aus einer Gruppe, die reinigen, ausbessern, schneiden, bohren, glätten, polieren, entgraten und ausrüsten mit Armaturen umfasst.

Die so erhaltenen Formteile eignen sich insbesondere zur Verwendung als Küchenspüle, Waschbecken, Duschtasse, Badewanne, Arbeitsplatte, Boden-, Wand- oder Decken-platte oder als sonstiges Formteil, z. B. im Möbelbau.

Diese wie oben beschriebenen Formteile zeichnen sich durch mindestens eine technische Eigenschaft aus, welche mindestens dem Stand der Technik von auf Basis von Quarzsand und Polyester oder Acrylatharz hergestellten Formteilen entspricht. Diese mindestens eine technische Eigenschaft ist vorzugsweise ausgewählt aus einer Gruppe, die Kratzfestigkeit, Bruchzähigkeit, Heiß-Kalt-Wechsel-Beständigkeit und Chemikalienbeständigkeit umfasst. Vorzugsweise weist ein wie oben beschriebenes Formteil sogar mindestens eine technische Eigenschaft auf, in der es die aus dem Stand der Technik bekannten und auf Basis von Quarzsand und Polyester oder Acrylatharz hergestellten Formteilen übertrifft. Darüber hinaus weist ein solches Formteil gegenüber einem aus dem Stand der Technik bekannten Formteil gleicher Geometrie auf Basis von Quarzsand und Polyester oder Acrylatharz vorzugsweise ein geringeres Gewicht (beziehungsweise eine geringere Dichte) auf. Ebenfalls ist vorzugsweise die CO₂-Bilanz verbessert und/oder eine verbesserte Recyclierbarkeit gegeben.

Weitere Vorteile, Ziele und Eigenschaften der vorliegenden Erfindung werden anhand der nachfolgenden Beispiele ausgewählter Ausführungsformen und Varianten erläutert.

### Beispiele und Versuchsergebnisse

In einer ersten Versuchsreihe wurden Untersuchungen mit Hanf- und Kümmelbasierten Rohstoffen als Trägerpartikeln durchgeführt. Bei den verwendeten Rohstoffen handelt es sich im untersuchten Beispiel um Reststoffe, die bei der Gewinnung von Hanf- und Kümmelölen aus den Saaten der Pflanzen anfallen. Die dabei anfallenden noch ölhaltigen Restbestandteile wurden getrocknet und auf eine Korngröße (d50) < 1000 µm gemahlen. Danach konnten die Reststoffe als Rohstoffe für Trägerpartikel genutzt werden.

Beide Rohstoffe (Kümmel und Hanf) wurden in einem Pemat-Mischer (optional Küchenmaschine) mit 9 Ma-% schwarzem, anorganischen Pigment gemischt, mit 5 Ma-% eines organischen Bindemittels überzogen und in einem Trockenschrank bei < 100°C getrocknet. Dadurch erhält man ein schwarz eingefärbtes Granulat auf Basis nachwachsender Rohstoffe, welches ein Beispiel eines erfindungsgemäßen Füllstoffs ist. Dieses Granulat wurde im Versuchsbeispiel mit einem Massenanteil von 13 Ma-% einem schwarzen Farbsand-Mix zugegeben. Als Vergleichsbeispiel wurde dieser Farbsand-Mix (also 100 %-ige anorganische Farbsandmischung ohne Zusatz von Partikeln aus einer nachwachsenden Quelle) als Referenz herangezogen.

Die zu vergleichenden Füllstoffmischungen (anorganische Farbsandmischung gegenüber Farbsandmischung + 13 Ma-% Füllstoffe mit Trägerpartikeln aus nachwachsender Quelle) wurden mit einem aushärtbaren Acrylharz vermischt, um eine Gießmasse herzustellen. Der Anteil an Füllstoff (Gesamtmenge, also Farbsandmischung + ggf. erfindungsgemäße Füllstoffe) beträgt in der Gießmasse 70 Ma-%, der Anteil an Harz beträgt 30 Ma-%. Diese Gießmasse wurde in eine Form gegossen und ausgehärtet.

Die nach dem Aushärten erhaltenen Platten wurden Farbmetrisch vermessen und die L*a*b*-Werte notiert. Die ermittelten Werte sind in Tabelle 1 in der Spalte "Farbwerte vor Test" gelistet.

Anschließend erfolgt ein Test zur Überprüfung der Heißwasserbeständigkeit. Bei diesem Test wird ein Teil der Oberfläche jeder Platte für 8 h von Heißwasser umspült, welches bei 90°C gehalten wird. Im Anschluss wird die Platte getrocknet und erneut farbmetrisch vermessen. Die Ergebnisse sind in Tabelle 1 in der Spalte "Farbwerte nach Test" gelistet. Je geringer die Farbveränderungen bzw. die Differenzen ausfallen, desto heißwasserbeständiger ist der Prüfkörper.

**Tabelle 1: Ergebnisse des Heißwasserbeständigkeitstests**

| Füllstoff | Farbwert | Farbwerte vor Test | Farbwerte nach Test | Differenz |
|---|---|---|---|---|
| anorganische Farbsandmischung | L* | 23,84 | 30,00 | 6,16 |
| | A* | 0,00 | -0,45 | 0,45 |
| | B* | -0,51 | -2,29 | 1,78 |
| | L* | 24,31 | 28,54 | 4,23 |
| Anorganische Farbsandmischung + 13 Ma-% org. Füllstoffe | A* | 0,00 | -0,13 | 0,13 |
| | B* | -0,63 | -0,97 | 0,34 |

Überraschenderweise hat der Zusatz der Füllstoffe mit Trägerpartikeln auf Basis nachwachsender Rohstoffe, in diesem Beispiel Hanf, einen positiven Einfluss auf die Heißwasserbeständigkeit der Prüfkörper

Außerdem wurde die Oberflächengüte durch mikroskopische Analyse bewertet. Bei dem verwendeten Verfahren wird die Oberflächengüte der wie oben beschrieben hergestellten Prüfkörper mit einem Acrylharz als Bindemittel mikroskopisch bewertet. Aus den so ermittelten Daten lässt sich die Topographie und damit die Feinheit der Oberfläche ableiten. Es hat sich gezeigt, dass diese Methode sich sehr gut eignet, um Rückschlüsse hinsichtlich der Reinigungsfähigkeit einer Oberfläche ziehen zu können.

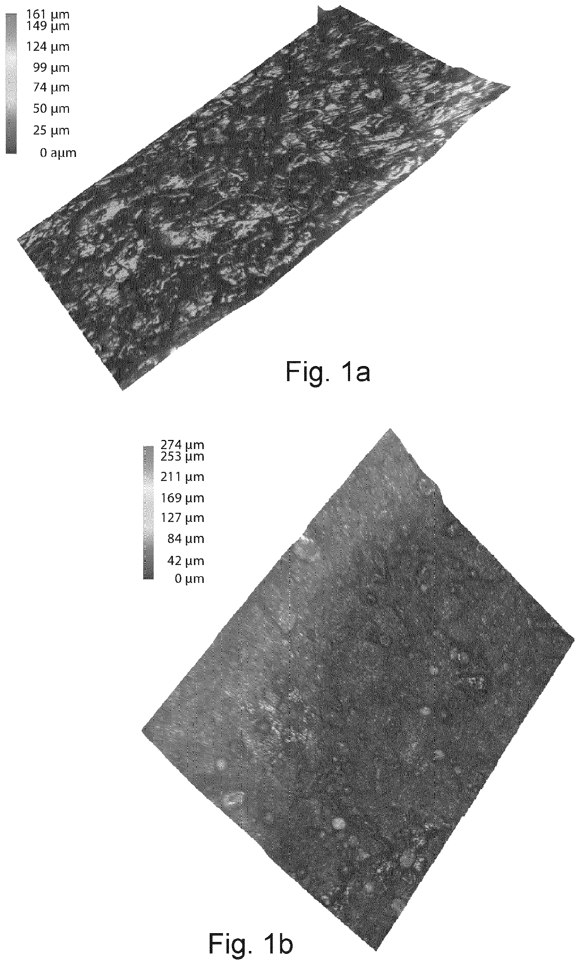

Die Ergebnisse dieser mikroskopischen Untersuchung sind in den Figuren 1a und 1b dargestellt und in diesem Zusammenhang genauer beschrieben. Als Ergebnis lässt sich feststellen, dass die Oberfläche des Prüfkörpers, welcher 13 Ma-% gefärbtes Hanfgranulat in der Füllstoffmischung enthält, im Gegensatz zu derjenigen des Prüfkörpers, der die reine anorganische Farbsandmischung als Füllstoff enthält, sehr eben ist, lediglich feine Unebenheiten aufweist und nicht rau ist. Sie weist somit eine höhere Oberflächengüte auf und ist demzufolge leichter zu reinigen.

Weiterhin wurde ein vergleichender Taber-Abrasion-Test nach DIN EN 13310 durchgeführt. Dazu wurden die oben beschriebenen Platten Abriebbeständigkeitsprüfungen nach DIN EN 13310 unterzogen. Dies erfolgte mittels eines Taber-Abriebgerätes. Die Ergebnisse sind in Tabelle 2 dargestellt.

**Tabelle 2. Ergebnisse des Taber-Abrasion-Tests**

| Füllstoff | Einwaage (g) | Auswaage (g) | Δ (mg) / 500 Zyklen | Δ (mg) / 100 Zyklen |
|---|---|---|---|---|
| anorganische Farbsandmischung | 89,079 | 89,055 | 24 | 4,8 |
| anorganische Farbsandmischung + 13 Ma-% org. Füllstoffe beschichtetes Hanfgranulat | 86,619 | 86,595 | 24 | 4,8 |

Man hätte erwarten können, dass ein gegenüber einem anorganischen Farbsand vergleichsweise weiches Material, wie die genutzten Trägerpartikel auf Basis nachwachsender Rohstoffe, aufgrund ihrer geringeren Härte nach Mohs zu einem höheren Abrieb in einem Prüfkörper führen würden. Wie Tabelle 2 zu entnehmen ist, sind die beim Taber-Abrasion-Test ermittelten Werte jedoch vergleichbar und unterscheiden sich hinsichtlich der ermittelten Differenz nicht. Die Nutzung der vergleichsweise weichen Trägerpartikel zur Herstellung eines Füllstoffs für Verbundwerkstoffteile verschlechtert die Abriebbeständigkeit eines derartigen Formteils somit nicht.

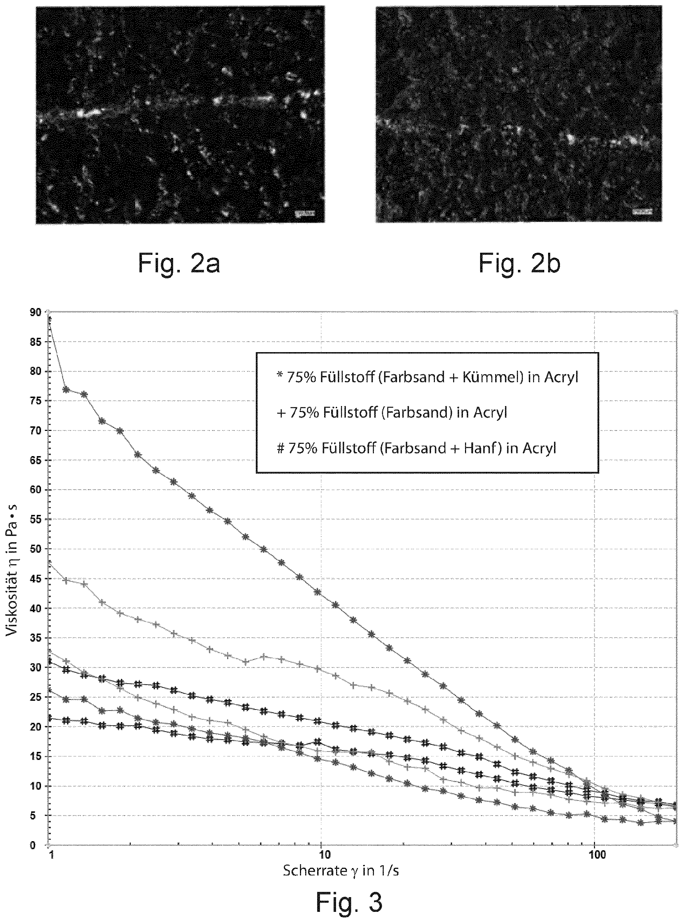

An den oben beschriebenen Prüfkörpern wurde weiterhin eine Kratzhärteprüfung nach Erichsen DIN EN 13310 durchgeführt. Zum Test wurde ein Erichsen-Kratztester genutzt, jedoch lediglich eine Kratztestung bei 5 N durchgeführt. Die Oberfläche wurden unter einem Mikroskop verglichen. Darstellungen der jeweils erhaltenen Oberflächen sind in den Figuren 2a und 2b dargestellt und werden in diesem Zusammenhang genauer beschrieben.

Überraschender Weise wurde gefunden, dass die Kratzhärte bei dem Prüfkörper, der den Zusatz des gefärbten Hanfgranulats enthält, sogar besser ist als bei dem Referenzmaterial. Dies könnte darauf beruhen, dass der Prüfkörper eine ebenere Oberfläche aufweist und daher die beim Kratztest lokal wirkende Kraft sich nicht auf einzelnen Oberflächenerhebungen konzentriert. Dadurch könnte die geringere Härte des als Füllstoff verwendeten Materials überkompensiert werden.

Schließlich wurden auch die Rheologie und das Fließverhalten der oben beschriebenen Gießmassen untersucht. Wie oben beschrieben wurden gefärbtes Kümmel- und Hanfgranulat zu jeweils 13 Ma-% einem schwarzen Farbsand-Mix zugemischt. Gießmassen, bestehend aus jeweils einer dieser Mischungen und 75 Ma-% Acrylharz (bezogen auf die Gesamtmasse der Gießmasse) wurden hergestellt und mit einer Vergleichsprobe vergleichen. Die Vergleichsprobe enthielt als Füllstoff ausschließlich den schwarzen Farbsand-Mix und als Bindemittel ebenfalls das Acrylharz in einem Massenanteil von 75 % (bezogen auf die Gesamtmasse der Gießmasse). Die so erhaltenen drei verschiedenen Gießmassen wurden rheologisch an einem Anton-Paar-Rheometer mithilfe eines vergleichbaren, eigens für diese Anwendung programmierten Messprogramms (Scherratensteigerung von 0 - 200 1/s, Scherratenabsenkung 200 - 0 1/s; Koaxiale Zylinder Messgeometrie mit Spindel und Zylinder) analysiert. Die Ergebnisse sind in Fig. 3 dargestellt und in diesem Zusammenhang genauer beschrieben.

Zusammenfassend kann zu Versuch 1 festgestellt werden, dass die bei Verwendung des Füllstoffs auf Basis des Hanfgranulats einen positiven Einfluss auf die Fließeigenschaften der Gießmasse hat, da die Viskosität gegenüber der Vergleichsgießmasse über einen weiten Messbereich verringert ist. Die Gießmasse mit dem kümmelbasierten Füllstoff zeigt eine etwas höhere Viskosität als die Vergleichsprobe, wobei die ermittelte Viskosität in einem akzeptablen Bereich liegt und sich die Gießmasse ebenfalls gut verarbeiten lässt.

In einer zweiten Versuchsreihe (V2) wurden Untersuchungen mit Hanfbasierten Rohstoffen als Trägerpartikeln durchgeführt, ansonsten vergleichbar zur Versuchsreihe 1.

In der Versuchsreihe 2 (V2) ist nur der Rohstoff Hanf in einem Pemat-Mischer (optional Küchenmaschine) mit 9 Ma-% schwarzem, anorganischen Pigment gemischt, mit 5 Ma-% eines organischen Bindemittels überzogen worden.

Im Unterschied zu V1 wurde das beschichtete Material in V2 in einer quaderförmigen Metallform mit den Innenmaßen 10 cm x 10 cm x 10 cm überführt. Nach Auflage eines Metalldeckels mit den Außenmaßen 9,9 cm x 9,9 cm und einer Höhe von 3 mm und durch einen darauf wirkenden beweglichen Stempel ist ein zusätzlicher mechanischer Außendruck erzeugt worden, wodurch die ursprüngliche Schüttdichte von 0,32 kg/l auf eine Dichte von 0,64 kg/l verdoppelt wurde. Bei diesen Bedingungen erfolgte dann die Aushärtung in einem Trockenschrank bei < 100°C.

Dadurch erhält man nach der Entformung im ersten Schritt ein kompaktiertes, schwarz eingefärbtes Formteil, welches über Bindemittelbrücken verbundene Partikel enthält. Diese Partikel lassen sich mechanisch leicht voneinander trennen, z. B. mittels Mörser oder langsam laufender Schneidmühle. Es resultieren daraus Partikel auf Basis nachwachsender Rohstoffe, die teilweise mit Bindemittel umhüllt sind.

Wie auch in V1 wurde dieses Granulat mit einem Massenanteil von 13 Ma % einem schwarzen Farbsand-Mix zugegeben. Als Vergleichsbeispiel wurde dieser Farbsand-Mix (also 100 %-ige anorganische Farbsandmischung ohne Zusatz von Partikeln aus einer nachwachsenden Quelle) als Referenz herangezogen.

Die zu vergleichenden Füllstoffmischungen (anorganische Farbsandmischung gegenüber Farbsandmischung + 13 Ma-% Füllstoffe mit Trägerpartikeln aus nachwachsender Quelle) wurden mit einem aushärtbaren Acrylharz vermischt, um eine Gießmasse herzustellen. Der Anteil an Füllstoff (Gesamtmenge, also Farbsandmischung + ggf. erfindungsgemäße Füllstoffe) beträgt in der Gießmasse 70 Ma-%, der Anteil an Harz beträgt 30 Ma %. Diese Gießmasse wurde in eine Form gegossen und ausgehärtet.

Die nach dem Aushärten erhaltenen Platten wurden Farbmetrisch vermessen und die L*a*b*-Werte notiert. Die ermittelten Werte sind in Tabelle 3 in der Spalte "Farbwerte vor Test" gelistet.

Anschließend erfolgt ein Test zur Überprüfung der Heißwasserbeständigkeit. Bei diesem Test wird ein Teil der Oberfläche jeder Platte für 8 h von Heißwasser umspült, welches bei 90°C gehalten wird. Im Anschluss wird die Platte getrocknet und erneut farbmetrisch vermessen. Die Ergebnisse sind in Tabelle 3 in der Spalte "Farbwerte nach Test" gelistet. Je geringer die Farbveränderungen bzw. die Differenzen ausfallen, desto heißwasserbeständiger ist der Prüfkörper.

**Tabelle 3: Ergebnisse des Heißwasserbeständigkeitstests**

| Füllstoff | Farbwert | Farbwerte vor Test | Farbwerte nach Test | Differenz |
|---|---|---|---|---|
| anorganische Farbsandmischung | L* | 23,84 | 30,00 | 6,16 |
| | A* | 0,00 | -0,45 | 0,45 |
| | B* | -0,51 | -2,29 | 1,78 |
| Anorganische Farbsandmischung + 13 Ma-% org. Füllstoffe | L* | 24,52 | 28,14 | 3,62 |
| | A* | 0,00 | -0,11 | 0,11 |
| | B* | -0,53 | -0,82 | 0,29 |

Überraschenderweise hat der Zusatz des Füllstoffes mit Trägerpartikeln auf Basis nachwachsender Rohstoffe, in diesem Beispiel Hanf, einen positiven Einfluss auf die Heißwasserbeständigkeit der Prüfkörper. Im Fall von V2 sind die Ergebnisse noch etwas besser als in V1

Weiterhin wurde ein vergleichender Taber-Abrasion-Test nach DIN EN 13310 durchgeführt. Dazu wurden die oben beschriebenen Platten Abriebbeständigkeitsprüfungen nach DIN EN 13310 unterzogen. Dies erfolgte mittels eines Taber-Abriebgerätes. Die Ergebnisse sind in Tabelle 4 dargestellt.

**Tabelle 4. Ergebnisse des Taber-Abrasion-Tests**

| Füllstoff | Einwaage (g) | Auswaage (g) | Δ (mg) / 500 Zyklen | Δ (mg) / 100 Zyklen |
|---|---|---|---|---|
| anorganische Farbsandmischung | 89,079 | 89,055 | 24 | 4,8 |
| anorganische Farbsandmischung + 13 Ma-% org. Füllstoffe beschichtetes Hanfgranulat | 88,362 | 88,340 | 24 | 4,4 |

Wie Tabelle 4 zu entnehmen ist, sind die beim Taber-Abrasion-Test ermittelten Werte sogar geringfügig besser als in V1 und als das Referenzmuster.

In einer dritten Versuchsreihe (V3) wurden ein weiteres Mal Untersuchungen mit Hanfbasiertem Rohstoff als Trägerpartikel durchgeführt, analog zur Versuchsreihe 2.

Der Feinstanteil, der sich vorzugsweise durch eine mittlere Partikelgröße (d50) ≤ 100 µm auszeichnet, kann abgetrennt werden und beispielsweise dem oben beschriebenen Verfahren erneut zugeführt werden, wobei bevorzugt die Partikel des Feinstanteils als Trägermaterial fungieren.

Im Unterschied zu V1 und V2 wurde in V3 der oben beschriebene abzutrennende beziehungsweise abgetrennte Feinstanteil, der sich vorzugsweise durch eine mittlere Partikelgröße (d50) < 100 µm auszeichnet, als Trägermaterial verwendet, wodurch sich auch diese Fraktion verwerten lässt, wie nachfolgend beschrieben.

Feinstanteil mit einem d50 ≤ 100 µm ist in einem Pemat-Mischer (optional Küchenmaschine) mit 9 Ma-% schwarzem, anorganischen Pigment gemischt, mit 5 Ma-% eines organischen Bindemittels überzogen worden.

Im Unterschied zu V1 und V2 wurden die beschichteten Materialien in V3 in einem Laborextruder mit einem innen konisch zulaufenden Mundstück mit einer kreisförmigen Öffnung von 1,0 cm Durchmesser schonend extrudiert worden, wodurch die ursprüngliche Schüttdichte von 0,32 kg/l auf eine Dichte von 0,84 kg/l gesteigert wurde. Die resultierenden zylinderförmigen Granulate wurden dann in einem Trockenschrank bei < 100°C ausgehärtet.

Durch die Trocknung verfestigen sich die Granulate zu porösen, kompaktierten, schwarz eingefärbten zylindrischen Formteilen. Auch hier kommt es zur Ausbildung von durch Bindemittelbrücken verbundener Partikel auf Basis der nachwachsenden Rohstoffe.

Die zylindrischen Granulate lassen sich mechanisch leicht voneinander trennen, analog zu V2 z. B. mittels Mörser oder langsam laufender Schneidmühle. Es resultieren daraus Partikel auf Basis nachwachsender Rohstoffe, die teilweise mit Bindemittel umhüllt sind.

Der besondere Vorteil dieser Vorgehensweise ist, dass durch die mechanische Zerkleinerung die insbesondere bevorzugte Korngröße von 0,1-3 mm bzw. 0,1-2 mm gezielt eingestellt werden kann, wodurch somit der Feinstanteil ebenfalls verwertet wird.

Wie auch in V1 wurde dieses Granulat mit einem Massenanteil von 13 Ma % einem schwarzen Farbsand-Mix zugegeben. Als Vergleichsbeispiel wurde dieser Farbsand-Mix (also 100 %-ige anorganische Farbsandmischung ohne Zusatz von Partikeln aus einer nachwachsenden Quelle) als Referenz herangezogen.

Die zu vergleichenden Füllstoffmischungen (anorganische Farbsandmischung gegenüber Farbsandmischung + 13 Ma-% Füllstoffe mit Trägerpartikeln aus nachwachsender Quelle) wurden mit einem aushärtbaren Acrylharz vermischt, um eine Gießmasse herzustellen. Der Anteil an Füllstoff (Gesamtmenge, also Farbsandmischung + ggf. erfindungsgemäße Füllstoffe) beträgt in der Gießmasse 70 Ma-%, der Anteil an Harz beträgt 30 Ma %. Diese Gießmasse wurde in eine Form gegossen und ausgehärtet.

Die nach dem Aushärten erhaltenen Platten wurden Farbmetrisch vermessen und die L*a*b*-Werte notiert. Die ermittelten Werte sind in Tabelle 5 in der Spalte "Farbwerte vor Test" gelistet.

Anschließend erfolgt ein Test zur Überprüfung der Heißwasserbeständigkeit. Bei diesem Test wird ein Teil der Oberfläche jeder Platte für 8 h von Heißwasser umspült, welches bei 90°C gehalten wird. Im Anschluss wird die Platte getrocknet und erneut farbmetrisch vermessen. Die Ergebnisse sind in Tabelle 5 in der Spalte "Farbwerte nach Test" gelistet. Je geringer die Farbveränderungen bzw. die Differenzen ausfallen, desto heißwasserbeständiger ist der Prüfkörper.

**Tabelle 5: Ergebnisse des Heißwasserbeständigkeitstests**

| Füllstoff | Farbwert | Farbwerte vor Test | Farbwerte nach Test | Differenz |
|---|---|---|---|---|
| anorganische Farbsandmischung | L* | 23,84 | 30,00 | 6,16 |
| | A* | 0,00 | -0,45 | 0,45 |
| | B* | -0,51 | -2,29 | 1,78 |
| Anorganische Farbsandmischung + 13 Ma-% org. Füllstoffe | L* | 24,52 | 29,94 | 5,42 |
| | A* | 0,00 | -0,35 | 0,35 |
| | B* | -0,53 | -0,98 | 0,45 |

Überraschenderweise hat der Zusatz des Füllstoffes mit Trägerpartikeln auf Basis nachwachsender Rohstoffe, in diesem Beispiel Hanf auf Basis der reagglomerierten Feinstpartikel, einen positiven Einfluss auf die Heißwasserbeständigkeit der Prüfkörper.

Weiterhin wurde ein vergleichender Taber-Abrasion-Test nach DIN EN 13310 durchgeführt. Dazu wurden die oben beschriebenen Platten Abriebbeständigkeitsprüfungen nach DIN EN 13310 unterzogen. Dies erfolgte mittels eines Taber-Abriebgerätes. Die Ergebnisse sind in Tabelle 6 dargestellt.

**Tabelle 6. Ergebnisse des Taber-Abrasion-Tests**

| Füllstoff | Einwaage (g) | Auswaage (g) | Δ (mg) / 500 Zyklen | Δ (mg) / 100 Zyklen |
|---|---|---|---|---|
| anorganische Farbsandmischung | 89,079 | 89,055 | 24 | 4,8 |
| anorganische Farbsandmischung + 13 Ma-% org. Füllstoffe beschichtetes Hanfgranulat | 89,882 | 89,906 | 24 | 4,8 |

Wie Tabelle 6 zu entnehmen ist, sind die beim Taber-Abrasion-Test ermittelten Werte auf gleichem Niveau wie die Referenz.

Weitere Vorteile, Ziele und Eigenschaften der vorliegenden Erfindung werden anhand nachfolgender Beschreibung der anliegenden Figuren erläutert.

In den Figuren zeigen:
- Fig. 1a - 1b: mikroskopische Darstellungen einer Prüfkörperoberfläche,
- Fig. 2a - 2b: Ergebnisse von Kratztests an verschiedenen Prüfkörpern,
- Fig. 3: ein Diagramm zum Vergleich der rheologischen Eigenschaften verschiedener Gießmassen.

Figur 1a und 1b zeigen mikroskopische Darstellungen von Prüfkörperoberflächen. Figur 1a zeigt dabei die Oberfläche eines Prüfkörpers, der als Füllstoff ausschließlich einen anorganischen Farbsand enthält. Der in Figur 1a dargestellte Prüfkörper enthält somit keinen erfindungsgemäßen Füllstoff, sondern ist ein Vergleichsbeispiel. Es hat sich gezeigt, dass derartige mikroskopische Analysen der Oberflächenstruktur sehr gut geeignet sind, um die Oberflächengüte von Prüfkörpern optisch darstellen zu können. Insbesondere lässt sich aus derartigen Untersuchungen die Topographie und damit die Feinheit der Strukturen der Oberfläche erkennen. Eine solche Analyse ist insbesondere bei Materialien sinnvoll, die zur Herstellung von sehr beanspruchten Oberflächen verwendet werden sollen, die auch häufigen und intensiven Reinigungsprozessen unterzogen werden. Es hat sich nämlich gezeigt, dass sich Flächen mit einer im Wesentlichen homogenen Topographie leichter reinigen lassen als stark strukturierte Oberflächen.

Die in Figur 1a dargestellte Oberfläche ist eine Oberfläche eines Prüfkörpers, der 75 Massen-% eines Farbsandes umfasst. Als Bindemittel wurde ein Acrylat verwendet. Derartige Verbundmaterialien finden in der Praxis vielfach Verwendung. Die Oberflächen derartiger Verbundwerkstoffe und auch des in Figur 1a gezeigten Prüfkörpers erfüllen im Wesentlichen bereits die Anforderungen hinsichtlich der geforderten Reinigungsfähigkeit.

Wie jedoch insbesondere im Vergleich mit der Darstellung in Figur 1b zu erkennen ist, ist die dort gezeigte Oberfläche nochmals deutlich feiner strukturiert und weist weniger Unebenheiten auf als die in Figur 1a dargestellte Oberfläche. Die in Figur 1b dargestellte Oberfläche gehört zu einem Prüfkörper, der ebenfalls 75 Massenprozent Füllstoff enthält und das selbe Acrylat wie der in Fig. 1a gezeigte Prüfkörper als Bindemittel nutzt. Anders als bei dem zur Herstellung des in Figur 1a dargestellten Prüfkörper verwendeten Füllstoff enthält der Füllstoff des Prüfkörpers aus Figur 1b jedoch 13 Massenprozent eines partikularen Füllstoffs, der ein Hanfgranulat als Trägermaterial hat.

Die in Figur 1b gezeigte Oberfläche ist deutlich homogener als die in Figur 1a gezeigte und lässt sich nochmals leichter reinigen. Auch die optische Erscheinung ist ansprechender.

Die Figuren 2a und 2b zeigen die Ergebnisse von Kratztests an verschiedenen Prüfkörpern. Dabei zeigt Figur 2a das Ergebnis eines Kratztests an einem Prüfkörpers wie er auch in Figur 1a dargestellt ist. Der zur Herstellung des untersuchten Verbundwerkstoffe genutzte Füllstoff basiert ausschließlich auf einem anorganischen Farbsand. Ein erfindungsgemäßer Füllstoff auf Basis eines nachwachsenden Rohstoffs ist in diesem Füllstoff nicht enthalten.

Der Kratztest wurde entlang einer in Figur 2a im Wesentlichen waagerecht und in der Mitte der Darstellung verlaufenden Linie durchgeführt. Die Linie, die beim Kratztest im Verbundmaterial verbleibt, ist über nahezu die gesamte Breite der Darstellung zu erkennen. Es sind lediglich kurze Unterbrechungen sichtbar. Eine Vielzahl äußerst heller Punkte zeigt eine starke Schädigung der gekratzten Oberfläche. Die hellen Punkte könnten daraus resultieren, dass Trägermaterial des Farbsandes freigelegt wird und die helle Eigenfarbe des Sandes sichtbar wird.

Figur 2b zeigt dagegen einen Kratztest, wie er an einem Prüfkörper analog zu dem Verbundwerkstoff durchgeführt wurde, wie er auch in Figur 1b gezeigt ist. Auch hier verläuft der Kratzer im Wesentlichen waagerecht in der Mitte der Darstellung. Der erkennbare Kratzer weist jedoch längere Unterbrechungen auf, an denen keine Schädigung der Oberfläche erkennbar ist.

Beide gekratzten Leistungen wurden nach DIN EN 13310 durchgeführt, jedoch bei einer Belastung von 5 N durchgeführt.

In Figur 2b sind lediglich vereinzelt hellere Punkte entlang der eingekratzten Linie zu erkennen. Die Schädigung der Oberfläche scheint somit insgesamt weniger stark und/oder tief zu sein als die in dem in Fig. 2a gezeigten Prüfkörper. Dies könnte damit begründet werden, dass sich die beim Kratzen auf die Oberfläche einwirkende Kraft aufgrund der im Zusammenhang mit den Figuren 1a und 1b beschriebenen geringeren Profilierung auf eine größere Fläche verteilt.

Figur 3 zeigt ein Diagramm, in dem die rheologischen Eigenschaften verschiedener Gießmassen miteinander verglichen sind. Alle hergestellten Gießmassen enthalten jeweils 75 Massenprozent Füllstoff in einem jeweils identischen Acrylharz. Die in Figur 3 mit "+" gekennzeichnete Probe enthält ausschließlich einen Farbsand als Füllstoff. Damit entspricht die Gießmassen im Wesentlichen der Gießmasse, wie sie zur Herstellung der Prüfkörper gemäß der Figuren 1a und 2a verwendet wurde. Für jede der Proben wurde die Scherrate jeweils bei einer Scherratensteigerung von 0 200 1/s und bei einer Scherratenabsenkung von 200-0 1/s gemessen. Durch die bei derartigen Viskositätsmessungen übliche Hysteresen sind in Figur 3 daher für jede Gießmasse zwei Graphen dargestellt.

Die mit "*" und "#" gekennzeichneten Graphen zeigen jeweils die Viskosität von Gießmassen, die ebenfalls 75 Massen-% Füllstoff enthalten, wobei dieser sich jedoch aus Farbsand und 13 Massen-% eines Füllstoffs zusammensetzt, der einen nachwachsenden Rohstoff als Trägermaterial enthält. Bei der mit "*" gekennzeichneten Probe basiert das Trägermaterial auf Kümmel, bei der mit "#" gekennzeichneten Probe auf Hanf. Als Bindemittel wurde auch hier jeweils das selbe Acrylat verwendet.

Wie der Figur 3 zu entnehmen ist, ist in der Probe, die den hanfbasierten Füllstoff enthält, die Viskosität über weite Bereiche niedriger als diejenige, die für Gießmasse ohne Füllstoff aus nachwachsenden Quellen gemessen wurde. Bei gleichem Füllgrad lassen sich derartige Gießmassen also leichter handhaben und sie dringen schneller und leichter in Kavitäten einer Gießform ein.

Auch die Gießmassen, die ein Trägermaterial auf Basis des nachwachsenden Rohstoffs Kümmel enthält, zeigt durchweg akzeptable rheologische Eigenschaften. Überraschenderweise besteht bei dieser Probe jedoch eine große Diskrepanz zwischen den Viskositäten, wie sie bei einer Scherratensteigerung und einer Scherratenabsenkung gemessen werden. Diese liegt einerseits sogar über weite Strecken niedriger als diejenige der Gießmasse ohne Füllstoff auf Basis von nachwachsenden Rohstoffen, andererseits jedoch über weite Strecken deutlich darüber. Eine Erklärung für dieses Verhalten konnte bisher noch nicht gefunden werden. Die für diese Gießmasse gemessenen Viskosität liegen jedoch durchweg in einem Bereich, der eine Verarbeitung nach den etablierten und aus dem Stand der Technik bekannten Verfahren zur Herstellung von Verbundwerkstoffeformteilen erlaubt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Füllstoffpartikel umfassend ein Trägermaterial aus einem nachwachsenden Rohstoff **dadurch gekennzeichnet, dass**
eine Oberfläche des Trägermaterials zumindest abschnittsweise eine Oberflächenbeschichtung aufweist.

2. Füllstoffpartikel nach Anspruch 1,
**dadurch gekennzeichnet, dass**
die Oberfläche des Trägermaterials nicht vollständig von der Oberflächenbeschichtung bedeckt ist.

3. Füllstoffpartikel nach Anspruch 1 oder 2,
**dadurch gekennzeichnet, dass**
der nachwachsende Rohstoff des Trägermaterials ausgewählt ist aus einer Gruppe, die Kerne; Schalen; Kernfolgeprodukte; Schalenfolgeprodukte; biobasierte Kunststoffe; biobasierte Monomere; biobasierte Polymere; Ligninfolgeprodukte; Holz; Holzfolgeprodukte, wie beispielsweise Späne, Fasern, Zellstoff, Lignin, Kork, Laub, Nadeln; Papier; Karton; Presspahnmaterialien; MDF (Mitteldichte Holzfaserplatte); HDF (Hochdichte Faserplatte); OSB (englisch für oriented strand board, Grobspanplatten); Faserverbunde; imprägnierte Faserverbunde; Dämmmaterialien; Kurzumtriebspflanzen und/oder deren Folgeprodukte, wie beispielsweise Baumwolle, Gras, Stroh, Spelzen, Kleie, Hanffasern, Sisal, Jute; Obst- und Ackerfrüchte und deren Folgeprodukte, wie beispielsweise Zuckerrübenfasern, Melasse, Trester; Fermentationsmaterialien; Fermentationsrückstände und Vergleichbares, wie beispielsweise Hefezellen, Filtrationsrückstände der Wein, Saft und Bierherstellung; Ölfrüchte, deren Kerne und bei der Ölgewinnung verbleibende Presskuchen; Materialien tierischen Ursprungs, wie beispielsweise Wolle, Haare, Knochen; und Polymere umfasst..

4. Füllstoffpartikel nach einem der vorangegangenen Ansprüche,
**dadurch gekennzeichnet, dass**
der Füllstoffpartikel mindestens ein weiteres anorganisches und/oder organische Material umfasst, wobei bevorzugt mindestens ein weiteres Material ausgewählt ist aus einer Gruppe, die einen Füllstoff, ein Pigment, ein Additiv, ein Bindemittel, ein Trennmittel, einen organische und/oder anorganische Funktionsstoff, Glitter, Glimmer, ein Effektpigment, ein anorganisches und/oder ein organisches Rheologieadditiv und ein Biozid umfasst.

5. Füllstoffpartikel nach einem der vorangegangenen Ansprüche,
**dadurch gekennzeichnet, dass**
das Trägermaterial eine mittlere Korngröße (d50, Laserbeugung und/oder Siebanalyse) von ≤ 10 mm, bevorzugt ≤ 5 mm, mehr bevorzugt ≤ 3 mm, weiter bevorzugt ≤ 2 mm, insbesondere bevorzugt ≤ 1000 µm, gegebenenfalls auch ≤ 500 µm, und/oder 0,1 - 5 mm, bevorzugt 0,1 - 3 mm, weiter bevorzugt 0,1 - 2 mm aufweist.

6. Füllstoffpartikel nach einem der vorangegangenen Ansprüche,
**dadurch gekennzeichnet, dass**
das Trägermaterial eine Mischung von Fraktionen verschiedener Materialien und/oder Korngrößen umfasst, wobei eine Fraktion vorzugsweise Quarzsand und/oder Quarzmehl umfasst oder die Mischung in der Summe einen Quarzanteil < 0,1 Ma-% enthält.

7. Gießmasse, umfassend ein oder mehrere Bindemittel, ausgewählt aus einer Gruppe, die ein ungesättigtes flüssiges aushärtbares Polyesterharz; ein flüssiges aushärtbares Monomer, Oligomer oder Polymer, insbesondere MMA und/oder PMMA; ein aushärtbares Melaminharz; ein aushärtbares Formaldehydharz; ein aushärtbares Epoxidharz; und ein Polyurethanharz umfasst,
**dadurch gekennzeichnet, dass**
die Gießmasse ≥ 20 Massenprozent, bevorzugt ≥ 40 Massenprozent, weiter bevorzugt ≥ 60 Massenprozent, meist bevorzugt ≥ 80 Massenprozent Füllstoffpartikel nach einem der vorangegangenen Ansprüche umfasst.

8. Formteil, umfassend ein oder mehrere zumindest teilweise ausgehärtete Bindemittel, ausgewählt aus einer Gruppe, die ein ausgehärtetes Polyesterharz; ein Polymer, insbesondere MMA und/oder PMMA; ein ausgehärtetes Melaminharz; ein ausgehärtetes Formaldehydharz; ein ausgehärtetes Epoxidharz; und ein Polyurethan umfasst, **dadurch gekennzeichnet, dass**
das Formteil ≥ 20 Massenprozent, bevorzugt ≥ 40 Massenprozent, weiter bevorzugt ≥ 60 Massenprozent, meist bevorzugt ≥ 80 Massenprozent Füllstoffpartikel nach einem der Ansprüche 1 - 6 umfasst.

9. Verfahren zur Herstellung von Füllstoffpartikeln
**gekennzeichnet durch** die Schritte
- Bereitstellen mindestens eines Trägermaterials aus einem nachwachsenden Rohstoff,
- Bereitstellen einer Beschichtungsmasse, und
- Aufbringen der Beschichtungsmasse auf zumindest Abschnitte einer Oberfläche des Trägermaterials zur Ausbildung einer zumindest abschnittsweisen Oberflächenbeschichtung.

10. Verfahren nach Anspruch 9,
**dadurch gekennzeichnet, dass**
die Füllstoffpartikel auf eine Zielpartikelgröße eingestellt werden, wobei die Einstellung der Zielpartikelgröße vorzugsweise einen Verfahrensschritt umfasst, welcher ausgewählt ist aus einer Gruppe, die brechen, mahlen, schneiden, kompaktieren, granulieren, sprühgranulieren, aufbaugranulieren, Wirbelschichtverfahren und extrudieren umfasst.
